(19) Europäisches Patentamt / European Patent Office / Office européen des brevets

(11) **EP 2 319 109 B1**

(12) **EUROPEAN PATENT SPECIFICATION**

(45) Date of publication and mention of the grant of the patent:
**20.08.2014 Bulletin 2014/34**

(21) Application number: **09809254.7**

(22) Date of filing: **27.08.2009**

(51) Int Cl.:
*H01M 4/02* (2006.01)     *H01M 4/04* (2006.01)
*H01M 4/13* (2010.01)     *H01M 4/139* (2010.01)
*H01M 10/04* (2006.01)     *H01M 10/0525* (2010.01)
*H01M 10/0587* (2010.01)

(86) International application number:
**PCT/CN2009/073582**

(87) International publication number:
**WO 2010/022669 (04.03.2010 Gazette 2010/09)**

(54) **BATTERY ELECTRODE PLATE, FORMING METHOD THEREOF AND BATTERY HAVING THE SAME**

BATTERIEELEKTRODENPLATTE, VERFAHREN ZU IHRER HERSTELLUNG UND BATTERIE DAMIT

PLAQUE ÉLECTRODE DE BATTERIE, PROCÉDÉ DE FABRICATION ASSOCIÉ ET BATTERIE COMPORTANT LADITE PLAQUE ÉLECTRODE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.08.2008 CN 200810142086**
**14.11.2008 CN 200810181816**
**22.12.2008 US 341704**
**24.12.2008 PCT/CN2008/073678**

(43) Date of publication of application:
**11.05.2011 Bulletin 2011/19**

(73) Proprietor: **Byd Company Limited**
**Guangdong 518118 (CN)**

(72) Inventors:
• **HAN, Lei**
**Guangdong 518118 (CN)**
• **WANG, Changping**
**Guangdong 518118 (CN)**

(74) Representative: **HOFFMANN EITLE**
**Patent- und Rechtsanwälte**
**Arabellastrasse 4**
**81925 München (DE)**

(56) References cited:
**WO-A1-2009/079964     JP-A- 9 180 704**
**JP-A- H1 092 418     JP-A- 2000 021 453**
**JP-A- 2000 021 453     US-A1- 2001 019 795**
**US-A1- 2002 197 535     US-A1- 2009 162 739**

**Description**

**TECHNICAL FIELD**

The present invention relates to field of battery, more particularly to a battery electrode plate suitable for a lithium secondary battery, a forming method thereof and a battery having the same.

**BACKGROUND OF THE INVENTION**

Lithium ion battery has high energy density, long cycle life span and high open circuit voltage, and it is also safe and environment amicable. Therefore it is widely used in laptop computer, digital camera, video camera, PDA, MP3, Bluetooth, PMP as well as power for other personal electronic devices for communication or entertainment. And lithium ion batteries are gradually expanding to electric bicycles or electric car field. The market share of lithium batteries is above 90% currently. Nowadays, lithium ion battery is the most competitive and already commercialized new secondary power sources.

However, for the lithium ion batteries in the prior art, while rolling the dressed electrode plates, the edges of the electrode material region will extend to certain extent, and the extension rates of the dressing and the current collector itself are different, thus the edges of the plates may have current drapes, and the plates may brake during coiling and thus may affect the battery performance severely.

US 2001/0019795 A1 describes a flat cell that employs strip-shaped electrode plates on which an active material layer has been formed by coating paste or by electrolytic deposition on both sides or one side of a core material consisting of a metal foil. By constructing an electrode group having an oval cross section by spirally winding, a strip-shaped positive plate having a striped recessed portion of a predetermined width of which the center is positioned on the line of folding is formed on the active material layer.

JP 2000-021453 A describes a non-aqueous electrolyte secondary battery unsing an electrode formed by spirally rolling a positive electrode plate, in a state with a negative electrode plate and separators pinched between both electrodes. At least in the surface of the positive electrode plate, the thickness of a positive electrode active material layer is gradually reduced so as to be separated far from a positive electrode lead fitting position.

US 2002/0197535 A1 relates to products that are in particular useful in electrochemical cells and a corresponding method for manufacturing the same. Thereby, certain materials are coated on a substrate, the edges of which are covered with an edge material in order to improve the thickness profile of the overall coating, to augment the thickness of the coating material edge, and to affect the shape of the material edge.

JP 10-092418 A describes a manufacturing device for a battery electrode plate, wherein the active material for the electrode plate is released from nozzles to form an active material layer on both surfaces of a collector.

**SUMMARY OF THE INVENTION**

In viewing thereof, the present invention is directed to solve at least one of the problems existing in the prior art. Accordingly, the present invention needs to provide a battery electrode plate which may not drape or wrinkle during rolling whereas the yield rate thereof may be improved. Further, a method of forming the battery electrode plate and a battery having the same are needed to be provided accordingly.

According to the invention, a battery electrode plate is provided, comprising a squared current collector with electrode material being coated on at least a portion of the current collector. The portion of the current collector has a first thickness region, a second thickness region which has a thickness smaller than that of the first thickness region and a transition region tapering from the first thickness region toward the second thickness region, wherein the electrode material is coated uniformly in the first and second thickness regions, respectively and a descending gradient of the thickness of the electrode material in the transition region from the first thickness region toward the second thickness region is 5 - 300 $\mu$m/mm and the battery electrode further comprises an insulating layer covering at least the electrode material on the transition region and the second thickness region.

According to the invention, a method of forming a battery electrode plate is provided, comprising the steps of: coating slurry of electrode material on a current collector, and drying and rolling the coated current collector to obtain the electrode plate. Before rolling, a thinning step is performed to form a first thickness region, a second thickness region and a transition region tapering from the first thickness region toward the second thickness region for the coated electrode material, in which a thickness of the electrode material in the first thickness region is greater than that in the second thickness region, wherein the electrode material is coated uniformly in the first and second thickness regions, respectively and a descending gradient of the thickness of the electrode material in the transition region from the first thickness region toward the second thickness region is 5 - 300 $\mu$m/mm and the battery electrode further comprises an insulating layer covering at least the electrode material on the transition region and the second thickness region.

According to still another embodiment of the invention, a battery is provided, comprising: a battery shell, a battery core and electrolyte both encapsulated in the battery shell. The battery core is formed of a positive electrode plate, a negative electrode plate and a separator disposed between the positive and negative electrode plates. At least the positive electrode plate is a battery electrode according to the invention as described hereinabove or made according to the method of the invention as described hereinabove.

The current collector in the present invention may not break or drape or wrinkle during rolling and as a result yield rate of the electrode plates may be improved and it is adapted for large scale industrial production. And the battery according to the present invention may have improved safety performance.

## DESCRIPTION OF THE DRAWINGS

The aforementioned features and advantages of the invention as well as additional features and advantages thereof will be more clearly understood hereafter as a result of a detailed description of the following embodiments when taken conjunction with the drawings, wherein:

Fig 1 shows a battery electrode plate according to an embodiment of the invention.
Fig 2 shows a perspective view of a battery core according to an embodiment of the invention.

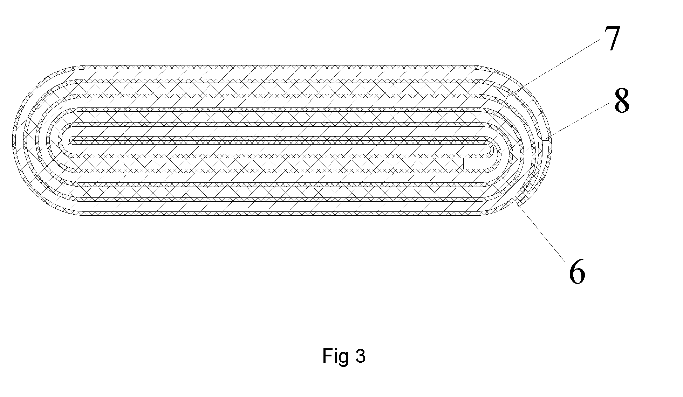

Fig 3 shows a cross section view of a battery core according to an embodiment of the invention.

Figure numerals are designated as follows:

1. First thickness region
2. Transition region
21. Positive tab
22. Negative tab
3. Second thickness region
4. Tab region
5. Electrode current collector
6. Separator
7. Terminating end of the positive electrode plate
8. Terminating end of the negative electrode plate

## DETAILED DESCRIPTION OF THE EMBODIMENTS

The aforementioned features and advantages of the invention as well as additional features and advantages thereof will be more clearly understood hereafter as a result of a detailed description of the following embodiments when taken conjunction with the drawings.

The present invention discloses a battery electrode plate comprising a squared current collector and electrode material coated on the current collector. The portion of the current collector coated with electrode material has a first thickness region and a second thickness region. The coated electrode material of the first thickness region is thicker than the second thickness region. There is a transition region between the first thickness region and the second thickness region. In the transition region, the thickness of the electrode material is gradually decreasing or taping from the first thickness region to the second thickness region.

In the present invention, the first thickness region, the transition region, the second thickness region and the tab region can be divided as follows: take the direction which is parallel with the current collector as a length direction, and take the direction which is vertical to the length direction as a width direction. In the width direction, the electrode material region contained on the current collector is in turns as follows: the first thickness region, the transition region and the second thickness region.

The current collector can be prepared from any material that is known in the art. For example, in the lithium secondary batteries, the positive current collector can be A1 foil and the negative current collector can be Cu foil.

The electrode material is known in the art. For example, in the lithium secondary batteries, the positive electrode material comprises positive adhesive agents, positive active material and positive conductive agents. The contents of the positive adhesive agents, positive active material and positive conductive agents are conventional.

There is no special requirement for the positive active materials in the present invention, which is known in the art. The positive active material can be purchased from the market, for example $LiFePO_4$, $Li_3V_2(PO_4)_3$, $LiMn_2O4$, $LiMnO_2$, $LiNiO_2$, $LiCoO_2$, $LiVPO_4F$, $LiFeO_2$; or triple series $Li_{1+a}L_{1-b-c}M_bN_cO_2$, $-0.1 \leq a \leq 0.2$, $0 \leq b \leq 1$, $0 \leq c \leq 1$, $0 \leq b+c \leq 1$, in which L, M, N are one or more selected from Co, Mn, Ni, Al, Mg, Ga and 3d transition metal elements.

The positive conductive agent can be any positive conductive agent known in the art. For example, it can be one or more selected from Graphite, Carbon fiber, carbon black, metal powder and fiber. The positive material is mixed with solvent to obtain positive slurry. The solvent can be any solvent known in the art, for example, which can be one or more selected from N-methyl pyrrolidone (NMP), dimethylformamide(DMF), diethyl formamide(DEF), dimethyl sulfoxide(DMSO), tetrahydrofuran(THF), $H_2O$ and alcohols. The dosage of the solvent is used so that the positive slurry can be coated onto the positive current collector.

The present invention does not have special limitation for the negative material and it can be any conventional negative material in the prior art. The negative material normally comprises negative active material, negative adhesive agent and negative conductive agent. The negative active material can be purchased from the market, for example, graphite and lithium- titanium- oxygen (LiTiO) compound. The negative conductive agent can be Ni powder and/or Cu powder. The negative adhesive agent can be any adhesive agent used in the lithium secondary batteries that is known in the art. For example it can be one or more selected from polyvinylidene fluoride(PVDF), polytetrafluoroethylene(PTFE), sodium carboxymethylcellulose(CMC) and styrene-butadiene rubber(SBR).

In the direction from the first thickness region to the second thickness region, namely in the width direction, the width of the transition region is about 1-10mm, and the width of second thickness region is about 1-10mm. In an embodiment of the invention, the width of the transition region is about 3-8mm, the width of the second thickness region is about 3-8mm.

The thickness of the electrode material in the transition region is not greater than that in the first thickness region. The thickness of the electrode material in the second thickness region is not great than that in the transition region.

The transition region is smoothly connected with the first thickness region and the second thickness region. The electrode material in the first thickness region has a thickness of about 20-350um. The electrode material in the transition region has a thickness of about 15-300um. The electrode material in the second thickness region has a thickness of about 10-250um. In an embodiment of the invention, the maximum thickness of the electrode material in the transition region is equal to that of the first thickness region, and the minimum thickness of the electrode material in the transition region is equal to that of the second thickness region. In an embodiment of the invention, a ratio of a thickness of the electrode material in the first thickness region to a thickness of the electrode material in the second thickness region can be about 2-10:1.

According to the invention, and in order to avoid drape or wrinkle of the current collector, the descending gradient of the thickness of the electrode material in the transition region is about 5-300um/mm. In an embodiment of the invention, it may be 10-150um/mm. The calculation method of the descending gradient is as follows:

The descending gradient = (the maximum thickness of the transition region-the minimum thickness of the transition region) / the width of transition region.

The thickness of the electrode material of the first thickness region and the second thickness region is uniform in a thickness direction of the battery electrode plate respectively, and the descending gradients are the same.

The battery electrode plate further comprises tab regions without electrode 6 material being coated thereon. The tab region is formed at a lateral side of the second thickness region facing away from the transition region with a width of substantially 10-100mm in a direction from the first thickness region to the second thickness region. In an embodiment of the invention, it has a width of substantially 20-70mm.

Taking the positive electrode plate as an illustrative example of the electrode plates in the present invention, the method thereof can be as follows: mixing the positive active material, conductive agent, adhesive agent and solvent and stirring the mixture to obtain the positive slurry. The positive active material, conductive agent, adhesive agent, solvent are the same as above mentioned, and the detailed description is omitted here for brevity purpose.

The present invention further discloses a method of forming the battery electrode plate comprising: coating slurry of electrode material on a current collector, and drying and rolling the coated current collector to obtain the electrode plate, wherein before rolling, a thinning step is performed to form a first thickness region, a second thickness region and a transition region tapering from the first thickness region toward the second thickness region for the coated electrode material, in which a thickness of the electrode material in the first thickness region is greater than that in the second thickness region.

The thinning step can be scraping or coating directly to form the first thickness region, transition region and second thickness region.

While the thinning method is directly coating the current collector to form the first thickness region, transition region and second thickness region, the method disclosed in the present embodiment comprises: coating electrode slurry on the current collector to form a first thickness region, transition region and second thickness region. The thickness of the electrode material in the first thickness region is greater than that in the second thickness region and the thickness of the electrode material is decreasing in the direction from first thickness region to second thickness region. Then drying the coated current collector and rolling it to obtain the electrode plate.

The above mentioned method of coating electrode slurry onto the current collector to form a first thickness region, transition region and second thickness region is: the current collector moves along the length direction, and coating the current collector in the width direction by controlling the slurry flux. In the corresponding widths of the first thickness region, transition region and second thickness region, the flux of the slurry differs. In the corresponding width of the first thickness region, the flux of the slurry remains the same. In the corresponding width of the second thickness region, the flux of the slurry remains the same too. In the corresponding width of the transition region, the slurry flux decreases from the first thickness region to the second thickness region. The specific flux is related to the moving speed of the current collector providing that the thickness of the electrode slurry in the first thickness region is greater than that in the second thickness region. The thickness of the electrode slurry decreases in the direction from the first thickness region to the second thickness region.

The above mentioned method of coating electrode slurry onto the current collector to form a first thickness region, transition region and second thickness region further can be: while coating the slurry, a blocking board is set at the exit of the electrode plate. The lower portion of the blocking board is spaces from the electrode plate by a certain distance, which is the thickness of the electrode slurry on the electrode plate. The current collector moves in the length direction, and the blocking board is set at the width direction of the current collector. In the corresponding widths direction of the first thickness region, the transition region and the second thickness region, the distance between the lower portion of the blocking board and the electrode plate corresponds with the required thickness of the electrode slurry. By using this method, the thickness of the electrode slurry and the descending trend of the transition region can be controlled by controlling the distance between the lower portion of the blocking board and the electrode plate, and the electrode plate with the first thickness region, the transition region and the second thickness region can be obtained.

In an embodiment of the invention, the location on the current collector is selected according to the required widths of the first thickness region, the transition region and the second thickness region. Then the slurry is coated in the first thickness region location, the transition region location and the second thickness region location in such a manner that the electrode slurry in the first thickness region is thicker than that in the second thickness region, and the thickness of the slurry tapers from the first thickness region to the second thickness region. Then the coated current collector is dried and rolled to obtain the desired battery electrode plate.

In the present invention, the first thickness region, the transition region and the second thickness region mean the electrode material or electrode slurry on the battery electrode plate provided in the present invention. The first thickness region location, the transition region location and the second thickness region location means the locations that the electrode material or slurry is occupied on the electrode plate respectively provided in the present invention.

While the thinning step is scraping, the detailed method is as follows: coating electrode slurry on the current collector, then scraping the coated slurry to form the first thickness region, the transition region and the second thickness region. The thickness of the electrode material in the first thickness region is greater than that in the second thickness region, and the thickness of the electrode material is decreasing gradually in the direction from first thickness region to the second thickness region. Then the coated current collector is dried and rolled to obtain the battery electrode plate.

In an embodiment of the invention, the above method is as follows: the locations of the first thickness region, the transition region and the second thickness region are selected respectively. Then the slurry is coated in the first thickness region location, the transition region location and the second thickness region location, and the thickness of the coating is the required thickness of the first thickness region. Then the electrode slurry is scraped in the transition region location and the second thickness region location to form the transition region and the second thickness region. The electrode slurry in the first thickness region is thicker than that in the second thickness region, and the thickness of the slurry in the transition region tapers or decreases gradually in the direction from the first thickness region to the second thickness region. Then the coated current collector is dried and rolled to obtain the battery electrode plate.

The method further can be: before rolling and after drying, scraping the electrode material to form the first thickness region, the transition region and the second thickness region. The electrode slurry in the first thickness region is thicker than that in the second thickness region, and the thickness of the slurry descends from the first thickness region to the second thickness region. Then drying and rolling the coated current collector to obtain the battery electrode plate.

The above method can also be as follows: coating the electrode slurry on the current collector and then scraping the electrode slurry to form the transition region. The thickness of the electrode slurry in the transition region decreases in the direction from the first thickness region to the second thickness region. Then the electrode slurry is coated in the second thickness region such that the second thickness region is smoothly connected with the transition region. The coated current collector is dried and rolled to obtain the battery electrode plate.

In an embodiment of the invention, the above mentioned method is as follows: selecting the location of the first thickness region, the transition region and the second thickness region. The electrode slurry is coated in the first thickness region location, the transition region location, and the thickness of the coating is the required thickness of the first thickness region. Then the electrode slurry is scraped in the transition region location to form the transition region. The thickness of the slurry in the transition region descends or tapers in the direction from the first thickness region to the second thickness region. Then the electrode slurry is coated in the second thickness region to form the second thickness region, and the thickness of the coating is the required thickness of the second thickness region. And then the coated current collector is dried and rolled to obtain the battery electrode plate.

The method further can be: before rolling and after drying, scraping the electrode material to form the first thickness region, the transition region and the second thickness region. The electrode slurry in the first thickness region is thicker than that in the second thickness region, and the thickness of the slurry descends from the first thickness region to the second thickness region. Then the coated current collector is dried and rolled to obtain the battery electrode plate.

In an embodiment of the invention, the above mentioned method is: selecting the location of the first thickness region, the transition region and the second thickness region. The electrode slurry is coated in the first thickness region location, the transition region location and the second thickness region location, and the thickness of the coating is the required thickness of the first thickness region. And the coated current collector is dried. The electrode slurry in the transition region location and the second thickness region location is scraped to form the transition region and the second thickness region. The electrode slurry in the first thickness region is thicker than that in the second thickness region, and the thickness of the slurry in the transition region descends in the direction from the first thickness region to the second thickness region. And the coated current collector is rolled to obtain the desired battery electrode plate.

The scraping method can be any method in the prior art, for example, scraping using a blade, and this can be done manually or by a machine. If the descending gradient of the electrode material in the transition region needs to be remained constant, the transition region can be scraped along two lines where the first thickness region and the second thickness region join with the transition region respectively.

In the battery electrode plate formed according to the above mentioned method, the electrode material in the first thickness region has a thickness of about 20-350um. The electrode material in the second thickness region has a thickness of about 10-250um. The descending gradient of the electrode material in the transition region is about 5-300um/mm.

The drying method is the common method used in the prior art, for example, drying under 100°C. The rolling method is also the method known in the art, for example, rolling under a pressure of about 2.0MPa.

After rolling, the thickness and/or width of the electrode material in each region may vary slightly, however the data will be still in the above mentioned range. In an embodiment of the invention, while forming the electrode plate, before rolling, the thickness of the electrode material or the electrode slurry in the first thickness region is about 25-350um, the thickness of the electrode material or the electrode slurry in the second thickness region is about 15-250um. The forming method can be performed by directly coating the above mentioned thickness of electrode slurry. The electrode plate prepared according to the above method may have lower risk of drape or wrinkle and the battery having the same may have improved safety performance.

While preparing the battery core, the positive electrode plate and the negative electrode plate are aligned based on one side in the length direction and overlapped together, and the plates are placed in a staggering manner in the width direction such that the tab regions without coating materials on the positive electrode and negative electrode will be exposed. A separator is disposed between the positive electrode plate and the negative electrode plate. The electrode material portion on the negative electrode plate totally covers the electrode material portion on the positive electrode plate. Then the overlapped electrode plates and the separator are coiled to obtain the battery core.

The separator is the separator known in the field, for example polyethylene.

According to the present invention, an insulating layer is further covered on the electrode material. The insulating layer covers at least the transition region and the second thickness region. The inventors found that as a result of the insulating layer, the possible direct contact between the positive electrode plate and the negative materials on the negative electrode plate while the negative electrode material is set to cover the positive material may be avoided, and internal short circuit inside the battery may be decreased. The battery safety performance may be improved.

The thickness of the insulating layer may vary in a relatively large range. In an embodiment of the invention, the thickness of the insulating layer is about 5-150um.

The insulating material can be any material that is commonly used in the field, for example, it can be one or more selected from polyphenylene sulfide, polyurethane, polyethylene and polypropylene.

The insulating layer can be formed directly by attaching an adhesive tape of the above mentioned material or directly coating the above mention adhesive agent. Normally, it is only required to form an insulating layer on the transition region and the second thickness region of the positive electrode plate. In an embodiment of the invention, attaching an adhesive tape is selected. The adhesive tape can be purchased from the market.

The battery prepared according to the above method may enhance the safety performance of the battery.

The invention further disclosed a battery comprising a battery shell, a core and electrolyte. The battery core and electrolyte are sealed in the battery shell. The battery core comprises a positive electrode plate, a negative electrode plate and a separator disposed in between the positive electrode plate and negative electrode plate. At least the positive electrode plate is the electrode plate provided in the present invention or formed according to the method in the present invention.

The battery safety performance may be enhanced by employing the above mentioned electrode plate.

The method of the battery provided in the invention is known in the art. The method comprises coiling the positive electrode plate, negative electrode plate and the separator in between into a core; disposing the battery core in the battery shell, injecting electrolyte into the battery shell and sealing the battery shell. Wherein the positive electrode comprises a current collector and the positive material coated on the current collector, the positive material comprises positive active material, conductive agent and adhesive agent. The coiling and sealing methods are known in the art. The dosage of the electrolyte is conventional.

The battery core is formed by first overlapping the positive electrode plate, the separator, the negative electrode plate and then coiling the overlapped plates and the separator. The length of the separator is able to make the terminating end of the separator be longer than the terminating ends of the positive electrode plates and the negative electrode plates. The separator is able to encircle at least a circle after the terminating end of the positive electrode plate and the negative electrode plate.

In an embodiment of the invention, the separator is able to encircle 1-10 circles after the terminating end of the positive electrode plate and the negative electrode plate. In an embodiment of the invention, the separator is able to encircle 2-6 circles after the terminating end of the positive electrode plate and the negative electrode plate.

The inventors found that the separator circle at the outer of the battery core will swell during both soakage of the electrolyte and charging-discharging, and the swelling rate is consistent with the battery core, so drape of the battery may be decreased and safety performance may be improved. Meanwhile, the method may enhance the electrolyte soakage and maintain battery performance.

During preparation, while the positive electrode plate, separator and the negative electrode plate are overlapped till the terminating ends of the positive electrode plate and the negative electrode plate, the free end of the separator continues to encircle the battery core by at least one circle to obtain the battery core. The outermost layer is at least one circle of the separator. While preparing the battery by the method, the manufacturing process may be simplified and the assembly efficiency may be enhanced and thus manpower as well as cost may be decreased.

In the present invention, the battery core is formed by coiling the overlapped positive electrode plate, separator and negative electrode plate and at least a portion of the circumferential line is arc. The terminating end of the positive electrode plate and/or the terminating end of the negative electrode plate is in the arc region of the battery core. To be specific, the battery core may be formed with at least a portion of a curved region in a circumferential direction so that the terminating end of the positive electrode plate and/or the terminating end of the negative electrode plate may terminate therein. The curved region may be formed with an arc or semi-circular shape, and the terminating ends of the positive electrode plate and the negative electrode plate may be positioned in the same curved region.

The circumferential line is the edge line of the battery core in the coiling direction. The arc line comprises the lines except for beelines. The curved region means the surface area of the battery core where the arc line is located.

In an embodiment of the invention, the terminating ends of the positive electrode plate and the negative electrode plate are in the same arc region. That is to say, the curved region may be formed with an arc or semi-circular shape, and the terminating ends of the positive electrode plate and the negative electrode plate may be positioned in the same curved region.

The inventors further found that, during charging and discharging, as the electrode plate expands and the thickness of the battery core increases and press against the battery shell, the battery shell further counter press the battery core correspondingly. As in the terminating end there is a thickness fall and the counterforce distributed along the thickness fall, which may cause stress concentration at the terminating ends and may cause drapes or wrinkles at the terminating ends, the battery safety performance may be affected.. While according to some embodiments, the terminating end of the positive electrode plate and/or the terminating end of the negative electrode plate and/or the terminating end of the separator is in the curved region of the battery core. As the curved region is not very close to the battery shell and there is still some space therebetween, thus while the battery core expands, the space between the curved region and the battery shell will buffer and may avoid large stress concentration in the arc area and may prevent drape or wrinkle of the battery core during use. Besides, in the charging and discharging process of the battery with a drape on the battery core, the space is bigger between the positive and negative electrode plates where the drape locates and thus charging and discharging may not be uniform, which is beneficial for lithium dendrites to grow. So a lot of lithium dendrites may grow in the drape region and may affect the safety performance of the battery. Setting the terminating end of the positive electrode plate and/or the terminating end of the negative electrode plate and/or the terminating end of the separator in the curved region of the battery core may decrease the negative effects of the lithium dendrites.

After the above mentioned treatment, drapes or wrinkles may be avoided while using the battery so the safety performance may be enhanced to a great extent.

The present invention is further described by the following embodiments.

First Embodiment (Reference Example)

The first embodiment explains the battery electrode plate and the battery using the same.
The positive material, conductive agent, adhesive agent and solvent are mixed and stirred to prepare the positive slurry.
The current collector is divided according to the above mentioned method into first thickness region location, the transition region location, second thickness region location and the tab region. The transition region location has a width of about 4mm. The width of the second thickness region location is about 4mm. The thickness of the tab region is about 30mm. The positive slurry is coated uniformly in the first thickness region location and the transition region location. The thickness of the positive slurry is about 100um. The positive slurry in the transition region is thinned gradually using a blade by controlling a machine and obtained the transition region positive slurry with a maximum thickness of about 100um, a minimum thickness of about 25um and a descending gradient of about 18.75um/mm. Then slurry is coated in the second thickness region location and the thickness of the positive slurry in the second thickness region is about 25um.
The coated current collector is then dried and rolled and obtained the positive electrode plate.
The negative material, conductive agent, adhesive agent and solvent are mixed and stirred to prepare the negative slurry.
Preserving a tab region with a width of 25mm on the negative current collector in the width direction, the negative slurry is coated uniformly on the non tab region of the negative current collector and the thickness of the coated slurry is about 90um, then the coated current collector is dried and rolled to obtain the negative electrode plate.
The positive electrode plate, separator and the negative electrode plate are overlapped such that the positive tab region is relative to the negative tab region and the electrode material on the negative electrode plate fully covers the electrode material on the positive electrode plate, then the overlapped plates and the separator are coiled to obtain the battery core.
The battery core is then disposed in the battery shell and electrolyte is injected into the battery core, the battery shell is sealed and the obtained battery is denoted as A1.

Second Embodiment

The second embodiment is used to explain the battery electrode plate and the battery according to an embodiment of the invention.
The method is the same as the example 1, the only difference is that: before coiling, a polyphenylene sulfide tape having a thickness of about 80um is attached on the positive material of the transition region and the second thickness region and the obtained battery is denoted as A2.

Third Embodiment

The third embodiment explains the battery electrode plate and the battery using the same according to an embodiment of the invention.
The positive material, conductive agent, adhesive agent and solvent are mixed and stirred to prepare the positive slurry.
The current collector is divided according to the above mentioned method to be the first thickness region location, the transition region location, the second thickness region location and the tab region. The width of the transition region location is about 6mm The width of the second thickness region location is about 6mm The thickness of the tab region is about 50mm. The positive slurry is coated uniformly in the first thickness region location and the transition region location. The thickness of the positive slurry is about 90um. The positive slurry in the transition region is thinned gradually by a blade mechanically controlled and obtains the transition region positive slurry with a maximum thickness of about 90um, a minimum thickness of about 30um and a descending gradient of about 10um/mm. Then slurry is coated in the second thickness region location and the thickness of the positive slurry in the second thickness region is about 30um.
The coated current collector is then dried and rolled and obtains the positive electrode plate.
The negative material, conductive agent, adhesive agent and solvent are mixed and stirred to prepare the negative slurry.
The method of the negative electrode plate is basically the same as the above mentioned method of the positive electrode plate, the differences are: the width of the transition region location is about 5mm. The width of the second thickness region location is about 5mm. The width of the tab region is about 40mm. The thickness of the negative slurry is about 100um. The negative slurry in the transition region is thinned gradually by a blade mechanically controlled and obtains the transition region negative slurry with a maximum thickness of about 100um, a minimum thickness of about 20um and a descending gradient of 16um/mm. Then slurry is coated in the second thickness region location and the thickness of the negative slurry in the second thickness region is about 20um. The coated current collector is then dried and rolled to obtain the negative electrode plate.

The methods of attaching an insulating layer and coiling and the battery assembly are the same as those in the second embodiment and the obtained battery is denoted as A3.

First Comparative Embodiment

The comparative embodiment explains the battery electrode plate and the battery using the same according to the prior art.

The electrode plate and the battery preparing method is the same as those in the first embodiment, the only difference lies in that the electrode plates are not thinned and the obtained battery is denoted as D 1.

Fourth Embodiment

The fourth embodiment explains the battery according to an embodiment of the invention.

The method is basically the same as the third embodiment, the only difference is that: before coiling, a polyphenylene sulfide tape having a thickness of about 50um is attached onto the positive material of the transition region and the second thickness region.

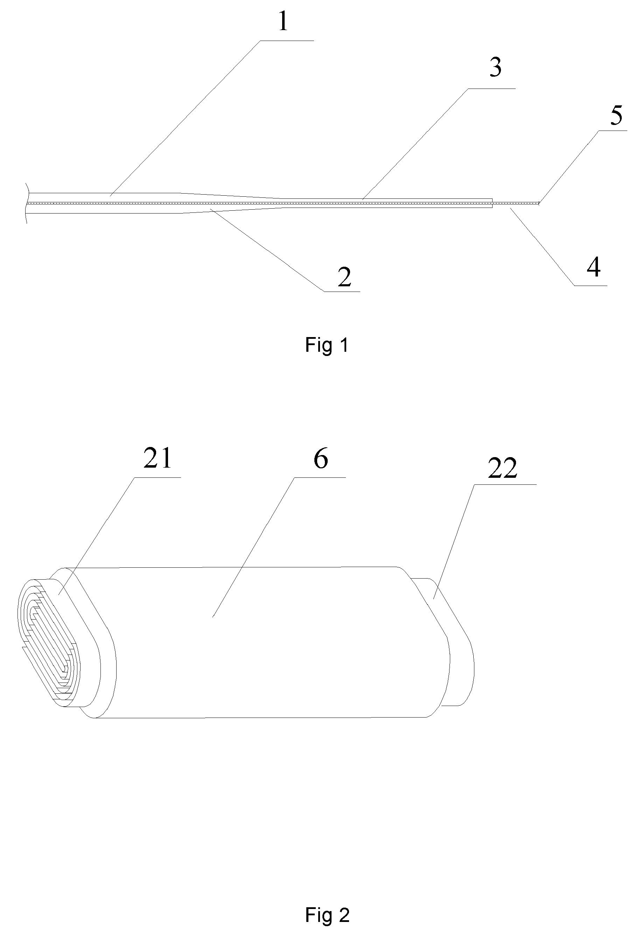

In preparing the battery core, the above positive electrode plate, the propylene separator and the negative electrode plate are coiled into a scroll core. While the positive electrode plate and negative electrode plate terminates, the free end of the separator continues coiling the battery core for one more circle and forms a layer of separator out of the positive and negative electrode plates. Then the separator is cut and fixed by the adhesive tape as shown in Fig 2.

Prepare the battery according to above mentioned method and the prepared battery is denoted as A4.

Fifth embodiment

The fifth embodiment explains the battery according to an embodiment of the invention.

The method of the positive and negative electrode plates and the assembly of the battery are basically the same as the third embodiment, the only difference is that:

In preparing the battery core, the above positive electrode plate, the propylene separator and the negative electrode plate are coiled into a scroll core, the terminating ends of the positive electrode plate, the negative electrode plate and the separator terminate in the curved region of the battery core.

The obtained battery prepared according to the above method is denoted as A5.

Second Comparative Embodiment

The present comparative embodiment explains the battery according to an embodiment of the invention.

The method of the positive and negative electrode plates and the assembly of the battery are basically the same as those in the fifth embodiment, the only difference is that:

The terminating ends of the positive electrode plate, the negative electrode plate and the separator do not terminate in the curved region of the battery core.

The obtained battery prepared according to the above method is denoted as D2.

Sixth Embodiment (Reference Example)

The method of the positive and negative electrode plates and the assembly of the battery are basically the same as the first embodiment, the only difference is that: the positive slurry is coated uniformly on the first thickness region location, transition region location and the second thickness region location and the thickness of the coated positive slurry is about 100um. The positive slurry in the transition region and the second thickness region is thinned gradually using a blade mechanically controlled. The obtained transition region positive slurry had a maximum thickness of about 100um, a minimum thickness of about 25um and a descending gradient of about 18.75um/mm. and the thickness in the second thickness region is about 25um. And the coated electrode plates are dried and rolled to obtain the positive electrode plate.

For the obtained positive electrode plate, the width of the first thickness region is about 4mm and the thickness of the positive material is about 90um. The width of the transition region is about 4mm and the positive material had a maximum thickness of 90um, a minimum thickness of 21um. The thickness of the positive material in the second thickness region is about 21um.

The battery prepared according to the above method is denoted as A6.

Seventh Embodiment (Reference Example)

The method of the positive and negative electrode plates and the assembly of the battery are basically the same as the sixth embodiment, the only difference is that: the positive slurry is coated uniformly on the first thickness region location, transition region location and the second thickness region location. The thickness of the coated positive slurry is about 100um. Then the coated current collector is dried. The positive slurry in the transition region and the second thickness region is thinned gradually using a blade by controlling the machine. The obtained transition region positive slurry had a maximum thickness of about 100um, a minimum thickness of about 25um and a descending gradient of about 18.75um/mm and the thickness in the second thickness region is about 25um. The coated electrode plates are dried and rolled to obtain the positive electrode plate.

For the obtained positive electrode plate, the width of the first thickness region is about 4mm and the thickness of the positive material is about 88um. The width of the transition region is about 4mm and the positive material had a maximum thickness of 88um, a minimum thickness of 20um. The thickness of the positive material in the second thickness region is about 20um.

The battery prepared according to the above method is denoted as A7.

Performance Tests

1. Yield Rate Test

Positive electrode plates A11, A21, A31, A41, A51 and D11 each with an amount of 100 are formed respectively according to the above embodiments 1-5 and first comparative embodiment to test the yield rate. The testing method is to observe the obtained plates and determine if there is any drape or break and so on.

$$\text{Yield rate} = \text{plates without drape or break} / \text{total plates (viz 100)} \times 100\%.$$

2. Safety Performance Test

The above prepared batteries A1-A5 and D1 are tested as follows.

The safety testing standard is according to QC/T 743-2006.

The testing results are shown in the following table 1.

Table 1

| Plates samples | Yield rate/% | Battery samples | Safety performance |
|---|---|---|---|
| All | 95 | A1 | Slight smoke |
| A21 | 97 | A2 | Non abnormal |
| A31 | 98 | A3 | Non abnormal |
| D11 | 66 | D1 | Explosion |
| A41 | 97 | A4 | Non abnormal |
| A51 | 98 | A5 | Non abnormal |

As shown in table 1, the electrode plates A21, A31, A41, and A51 according to the present invention have high yield rates and the safety performances thereof are improved greatly. Further, after adding insulating layer on the transition region and the second thickness region is beneficial for battery safety performance.

3. Battery Core Performance Test

Batteries according to the above first to fifth embodiments and the first, second comparative embodiments are prepared, and 100 batteries each for A1, A2, A3, A4, A5 and D1 and D2 are obtained respectively. The batteries are charged under a constant current of 3.2A, the upper limit charging voltage is 3.8V, the lower limit charging limit is 2.2V, the cutoff current is 0.2A, and laying aside for 10 minutes. Then the batteries are discharged at a constant current of 8A with a cutoff voltage of 2.0V. The batteries are charged and discharged for 10 cycles. And then the batteries are detached to determine if the battery core has any drape or macroscopic dendrite or alloy.

$$\text{Battery core draping rate} = \text{the amount of the batteries having drape}/100$$

In the present invention, the dendrite rate is used to describe a probability rate of the dendrite or alloy occurred in the battery core, viz:

$$\text{Dendrite rate} = \text{the amount of the batteries having dendrite or alloy}/100.$$

The test result is shown in the following table 2.

Table 2

| Battery sample | Battery core draping rate /% | Dendrite rate /% |
| --- | --- | --- |
| A1 (Reference) | 38 | 42 |
| A2 | 40 | 43 |
| A3 | 35 | 38 |
| D1 | 51 | 54 |
| A4 | 24 | 29 |
| A5 | 20 | 24 |
| D2 | 55 | 57 |

As shown in table 2, while preparing the battery core, if the separator encircles another circle of the battery core, or the terminating ends of the electrode plates and/or separator are located in the curved region, the rate of drape, dendrite or alloy in the battery during charging or discharging thus further enhances the battery safety performance.

It will be apparent to those skilled in the art that various modifications of the present invention may be made without departing from the scope of the present invention as defined in the appended claims.

**Claims**

**1.**  A battery electrode plate, comprising:

a squared current collector (5) with electrode material being coated on at least a portion of the current collector (5), the coated electrode material portion having
a first thickness region (1);
a second thickness region (3) which has a thickness smaller than that of the first thickness region (1); and
a transition region (2) tapering from the first thickness region (1) toward the second thickness region (3), wherein the electrode material is coated uniformly in the first and second thickness regions, respectively;
a descending gradient of the thickness of the electrode material in the transition region (2) from the first thickness region (1) toward the second thickness region (3) is 5-300$\mu$m/mm; and **characterized in that**
the battery electrode further comprises an insulating layer covering at least the electrode material on the transition region (2) and the second thickness region (3).

**2.**  The battery electrode plate according to claim 1, wherein the transition region (2) has a width of 1-10mm, the second thickness region (3) has a width of 1-10mm in a direction from the first thickness region (1) to the second thickness region (3),
the transition region (2) being tapered smoothly from the first thickness region (1) to the second thickness region (3), and the electrode material in the first thickness region (1) has a thickness of 20-350$\mu$m, the electrode material

in the second thickness region (3) has a thickness of 10-250$\mu$m,
a ratio of a thickness of the electrode material in the first thickness region (1) to a thickness of the electrode material in the second thickness region (3) falling within a range of 2-10:1.

3.  The battery electrode plate according to claim 1, wherein the electrode material in the first thickness region (1) and second thickness region (3) have uniform thicknesses in a thickness direction of the battery electrode plate respectively.

4.  The battery electrode plate according to claim 1, further comprising a tab region without electrode material being coated thereon, the tab region being formed at a lateral side of the second thickness region facing away from the transition region (2) with a width of 10-100mm in a direction from the first thickness region (1) to the second thickness region (3).

5.  The battery electrode plate according to claim 1, wherein the insulating layer has a thickness of 5-150um,
    the insulating layer being made of material selected from at least one of polyphenylene sulfide, polyurethane, polyethylene and polypropylene.

6.  A method of forming a battery electrode plate, comprising the steps of:

    coating slurry of electrode material on a current collector (5), and
    drying and rolling the coated current collector (5) to obtain the electrode plate, wherein before rolling, a thinning step is performed to form a first thickness region (1), a second thickness region (3) and a transition region (2) tapering from the first thickness region (1) toward the second thickness region (3) for the coated electrode material, in which a thickness of the electrode material in the first thickness region (1) is greater than that in the second thickness region (3),
    wherein the electrode material is coated uniformly in the first and second thickness regions respectively in the coating step;
    a descending gradient of the thickness of the electrode material in the transition region (2) from the first thickness region (1) toward the second thickness region (3) is 5-300$\mu$m/mm; and **characterized in that**
    the battery electrode further comprises an insulating layer covering at least the electrode material on the transition region (2) and the second thickness region (3).

7.  The method according to claim 6, wherein the thinning step is performed by scraping the coated electrode material on the current collector (5) or by coating directly on the current collector (5) to form the first thickness region (1), transition region (2) and the second thickness region (3).

8.  The method according to claim 7, further having the following feature:

    the transition region (2) is tapered smoothly from the first thickness region (1) to the second thickness region (3).

9.  A battery, comprising:

    a battery shell,
    a battery core and electrolyte encapsulated in the battery shell, the battery core being formed of a positive electrode plate, a negative electrode plate and a separator disposed between the positive and negative electrode plates, wherein at least the positive electrode plate is made of the battery electrode plate according to claim 1 or made from the method according to claim 8.

10. The battery according to claim 9, wherein the battery core is formed by coiling the positive electrode plate, the separator and negative electrode plate overlapped in turn, the separator has such a length that a terminating end thereof is longer than those of the positive electrode plate and the negative electrode plate.

11. The battery according to claim 10, wherein, the length of the terminating end of the separator is longer than the terminating ends of the positive and negative electrode plates by a length which can encircle the battery core by at least one circle,
    the length of the terminating end of the separator preferably being longer than the terminating ends of the positive and negative electrode plates by a length which can encircle the battery core by 1-10 circles.

**12.** The battery according to claim 10, wherein the battery core is formed with at least a portion of a curved region in a circumferential direction so that the terminating end of the positive electrode plate and/or the terminating end of the negative electrode plate terminate therein,
the curved region being formed with an arc or semi-circular shape, and the terminating ends of the positive electrode plate and the negative electrode plate are positioned in the same curved region.

## Patentansprüche

**1.** Batterieelektrodenplatte mit:

einem quadratischen Stromabnehmer (5) mit Elektrodenmaterial, das zumindest auf einem Abschnitt des Stromabnehmers (5) beschichtet ist, wobei der beschichtete Elektrodenmaterialabschnitt aufweist:

einen ersten Dickenbereich (1);
einen zweiten Dickenbereich (3), der eine kleinere Dicke als die des ersten Dickenbereichs (1) aufweist; und
einen Übergangsbereich (2), der sich von dem ersten Dickenbereich (1) hin zum zweiten Dickenbereich (3) verjüngt, wobei
das Elektrodenmaterial in den ersten und zweiten Dickenbereichen jeweils gleichmäßig beschichtet ist;
ein Abnahmegradient der Dicke des Elektrodenmaterials in dem Übergangsbereich (2) von dem ersten Dickenbereich (1) hin zum zweiten Dickenbereich (3) 5-300 $\mu$m/mm beträgt; und
**dadurch gekennzeichnet, dass**
die Batterieelektrode ferner eine isolierende Schicht aufweist, die zumindest das Elektrodenmaterial auf dem Übergangsbereich (2) und dem zweiten Dickenbereich (3) bedeckt.

**2.** Batterieelektrodenplatte nach Anspruch 1, bei welcher
der Übergangsbereich (2) eine Breite von 1-10 mm aufweist,
der zweite Dickenbereich (3) eine Breite von 1-10 mm in einer Richtung von dem ersten Dickenbereich (1) zum zweiten Dickenbereich (3) aufweist,
sich der Übergangsbereich (2) von dem ersten Dickenbereich (1) zum zweiten Dickenbereich (3) glatt verjüngt, und
das Elektrodenmaterial in dem ersten Dickenbereich (1) eine Dicke von 20-350gm aufweist, wobei das Elektrodenmaterial in dem zweiten Dickenbereich (3) eine Dicke von 10-250 gm aufweist, und
ein Verhältnis einer Dicke des Elektrodenmaterials in dem ersten Dickenbereich (1) zu einer Dicke des Elektrodenmaterials in dem zweiten Dickenbereich (3) in einen Bereich von 2-10:1 fällt.

**3.** Batterieelektrodenplatte nach Anspruch 1, bei der das Elektrodenmaterial in dem ersten Dickenbereich (1) und dem zweiten Dickenbereich (3) jeweils gleichförmige Dicken in einer Dickenrichtung der Batterieelektrodenplatte aufweist.

**4.** Batterieelektrodenplatte nach Anspruch 1, ferner mit einem Anschlussbereich, auf dem kein Elektrodenmaterial beschichtet ist, wobei der Anschlussbereich an einer Querseite des zweiten Dickenbereichs, die von dem Übergangsbereich (2) weg gerichtet ist, mit einer Breite von 10-100 mm in einer Richtung von dem ersten Dickenbereich (1) zum zweiten Dickenbereich (3) ausgebildet ist.

**5.** Batterieelektrodenplatte nach Anspruch 1, bei der
die isolierende Schicht eine Dicke von 5-150 gm aufweist, und
die isolierende Schicht aus Material ausgebildet ist, das aus Polyphenylsulfid, Polyurethan, Polyethylen und/oder Polypropylen ausgewählt ist.

**6.** Verfahren zum Herstellen einer Batterieelektrodenplatte mit den folgenden Schritten:

Beschichten einer Suspension aus Elektrodenmaterial auf einen Stromabnehmer (5), und
Trocknen und Rollen des beschichteten Stromabnehmers (5), um die Elektrodenplatte zu erhalten, wobei vor dem Rollen ein Dickenreduzierungsschritt ausgeführt wird, um für das beschichtete Elektrodenmaterial einen ersten Dickenbereich (1), einen zweiten Dickenbereich (3) und einen Übergangsbereich (2) auszubilden, der sich von dem ersten Dickenbereich (1) zum zweiten Dickenbereich (3) verjüngt, wobei eine Dicke des Elektrodenmaterials in dem ersten Dickenbereich (1) größer als die in dem zweiten Dickenbereich (3) ist,
wobei das Elektrodenmaterial in den ersten und zweiten Dickenbereichen jeweils gleichmäßig in dem Beschichtungsschritt beschichtet wird;

ein Abnahmegradient der Dicke des Elektrodenmaterials in dem Übergangsbereich (2) von dem ersten Dickenbereich (1) hin zum zweiten Dickenbereich (3) 5-300 μm/mm beträgt; und
**dadurch gekennzeichnet, dass**
die Batterieelektrode ferner eine isolierende Schicht aufweist, die zumindest das Elektrodenmaterial auf dem Übergangsbereich (2) und dem zweiten Dickenbereich (3) bedeckt.

7. Verfahren nach Anspruch 6, bei dem der Dickenreduzierungsschritt durch Abschaben des beschichteten Elektrodenmaterials auf dem Stromabnehmer (5) oder durch direktes Beschichten auf dem Stromabnehmen (5) ausgeführt wird, um den ersten Dickenbereich (1), den Übergangsbereich (2) und den zweiten Dickenbereich (3) auszubilden.

8. Verfahren nach Anspruch 7, das ferner das folgende Merkmal aufweist:

der Übergangsbereich (2) verjüngt sich glatt vom ersten Dickenbereich (1) zum zweiten Dickenbereich (3).

9. Batterie mit:

einer Batteriehülle,
einem Batteriekern und Elektrolyt, die in der Batteriehülle verkapselt sind, wobei der Batteriekern aus einer positiven Elektrodenplatte, einer negativen Elektrodenplatte und einem zwischen der positiven und der negativen Elektrodenplatte angeordneten Trennelement ausgebildet ist, wobei zumindest die positive Elektrodenplatte aus der Batterieelektrodenplatte nach Anspruch 1 oder gemäß dem Verfahren nach Anspruch 8 ausgebildet ist.

10. Batterie nach Anspruch 9, bei welcher der Batteriekern durch Aufwickeln der positiven Elektrodenplatte, des Trennelements und der negativen Elektrodenplatte, die sich abwechselnd überlappen, ausgebildet ist, und das Trennelement eine derartige Länge aufweist, dass ein Abschlussende davon länger als jene der positiven Elektrodenplatte und der negativen Elektrodenplatte ist.

11. Batterie nach Anspruch 10, bei der
die Länge des Abschlussendes des Trennelements länger ist, als die Abschlussenden der positiven und negativen Elektrodenplatten, und zwar um eine Länge, die den Batteriekern zumindest um eine Windung umgeben kann,
die Länge des Abschlussendes des Trennelements bevorzugt länger als die Abschlussenden der positiven und negativen Elektrodenplatten ist, und zwar um eine Länge, welche den Batteriekern um 1 bis 10 Windungen umgeben kann.

12. Batterie nach Anspruch 10, bei welcher der Batteriekern mit zumindest einem Abschnitt eines gekrümmten Bereichs in einer Umfangsrichtung derart ausgebildet ist, dass das Abschlussende der positiven Elektrodenplatte und/oder das Abschlussende der negativen Elektrodenplatte darin endet/enden, und
der gekrümmte Bereich mit einer Bogenform oder Halbkreisform ausgebildet ist, und die Abschlussenden der positiven Elektrodenplatte und der negativen Elektrodenplatte in dem gleichen gekrümmten Bereich angeordnet sind.

**Revendications**

1. Plaque-électrode de batterie, comprenant :

un collecteur de courant carré (5) avec un matériau d'électrode appliqué en revêtement sur au moins une partie du collecteur de courant (5), la partie de matériau d'électrode appliqué en revêtement ayant
une première région d'épaisseur (1) ;
une deuxième région d'épaisseur (3) qui a une épaisseur plus petite que celle de la première région d'épaisseur (1) ; et
une région de transition (2) s'effilant depuis la première région d'épaisseur (1) vers la deuxième région d'épaisseur (3), où
le matériau d'électrode est appliqué en revêtement de manière uniforme dans les première et deuxième régions d'épaisseur, respectivement ;
un gradient descendant de l'épaisseur du matériau d'électrode dans la région de transition (2) à partir de la première région d'épaisseur (1) vers la deuxième région d'épaisseur (3) est de 5 à 300 μm/mm ; et **caractérisée en ce que**
l'électrode de batterie comprend en outre une couche isolante couvrant au moins le matériau d'électrode sur la région de transition (2) et la deuxième région d'épaisseur (3).

2. Plaque-électrode de batterie selon la revendication 1, dans laquelle la région de transition (2) a une largeur de 1 à 10 mm, la deuxième région d'épaisseur (3) a une largeur de 1 à 10 mm dans une direction à partir de la première région d'épaisseur (1) jusqu'à la deuxième région d'épaisseur (3),
la région de transition (2) étant effilée de manière régulière depuis la première région d'épaisseur (1) jusqu'à la deuxième région d'épaisseur (3), et le matériau d'électrode dans la première région d'épaisseur (1) a une épaisseur allant de 20 à 350 $\mu$m, le matériau d'électrode dans la deuxième région d'épaisseur (3) a une épaisseur allant de 10 à 250$\mu$m,
un rapport d'une épaisseur du matériau d'électrode dans la première région d'épaisseur (1) sur une épaisseur du matériau d'électrode dans la deuxième région d'épaisseur (3) se trouvant dans une plage allant de 2 à 10:1.

3. Plaque-électrode de batterie selon la revendication 1, dans laquelle les épaisseurs du matériau d'électrode dans la première région d'épaisseur (1) et la deuxième région d'épaisseur (3) sont uniformes dans une direction d'épaisseur de la plaque-électrode de batterie, respectivement.

4. Plaque-électrode de batterie selon la revendication 1, comprenant en outre une région de languette non revêtue de matériau d'électrode, la région de languette étant formée au niveau d'un côté latéral de la deuxième région d'épaisseur opposé à la région de transition (2) avec une largeur de 10 à 100 mm dans une direction à partir de la première région d'épaisseur (1) jusqu'à la deuxième région d'épaisseur (3).

5. Plaque-électrode de batterie selon la revendication 1, dans laquelle la couche isolante a une épaisseur allant de 5 à 150 $\mu$m,
la couche isolante étant constituée d'un matériau choisi parmi au moins l'un du poly(sulfure de phénylène), du polyuréthane, du polyéthylène et du polypropylène.

6. Procédé de formation d'une plaque-électrode de batterie, comprenant les étapes qui consistent :

à appliquer en revêtement une suspension de matériau d'électrode sur un collecteur de courant (5), et
à sécher et à laminer le collecteur de courant revêtu (5) pour obtenir la plaque-électrode, où avant le laminage, une étape d'amincissement est effectuée pour former une première région d'épaisseur (1), une deuxième région d'épaisseur (3) et une région de transition (2) s'effilant depuis la première région d'épaisseur (1) vers la deuxième région d'épaisseur (3) pour le matériau d'électrode appliqué en revêtement, où une épaisseur du matériau d'électrode dans la première région d'épaisseur (1) est supérieure à celle dans la deuxième région d'épaisseur (3),
dans lequel le matériau d'électrode est appliqué en revêtement de manière uniforme dans les première et deuxième régions d'épaisseur, respectivement, dans l'étape de revêtement ;
un gradient descendant de l'épaisseur du matériau d'électrode dans la région de transition (2) à partir de la première région d'épaisseur (1) vers la deuxième région d'épaisseur (3) est de 5 à 300 $\mu$m/mm ; et **caractérisé en ce que**
l'électrode de batterie comprend en outre une couche isolante couvrant au moins le matériau d'électrode sur la région de transition (2) et la deuxième région d'épaisseur (3).

7. Procédé selon la revendication 6, dans lequel l'étape d'amincissement est effectuée par grattage du matériau d'électrode appliqué en revêtement sur le collecteur de courant (5) ou par application en revêtement directe sur le collecteur de courant (5) pour former la première région d'épaisseur (1), la région de transition (2) et la deuxième région d'épaisseur (3).

8. Procédé selon la revendication 7, ayant en outre la caractéristique suivants :

la région de transition (2) est effilée de manière régulière depuis la première région d'épaisseur (1) jusqu'à la deuxième région d'épaisseur (3).

9. Batterie, comprenant :

une enveloppe de batterie,
un noyau de batterie et un électrolyte encapsulé dans l'enveloppe de batterie, le noyau de batterie étant formé d'une plaque-électrode positive, d'une plaque-électrode négative et d'un séparateur disposé entre les plaques-électrodes positive et négative, où au moins la plaque-électrode positive est constituée de la plaque-électrode de batterie selon la revendication 1 ou fabriquée par le procédé selon la revendication 8.

10. Batterie selon la revendication 9, dans laquelle le noyau de batterie est formé par enroulement de la plaque-électrode positive, du séparateur et d'une plaque-électrode négative superposés l'un(e) sur l'autre, le séparateur a une longueur telle qu'une extrémité terminale de celui-ci est plus longue que celles de la plaque-électrode positive et de la plaque-électrode négative.

11. Batterie selon la revendication 10, dans laquelle, la longueur de l'extrémité terminale du séparateur est supérieure à celles des extrémités terminales des plaques-électrodes positive et négative d'une longueur qui peut encercler le noyau de batterie par au moins un cercle,
la longueur de l'extrémité terminale du séparateur étant de préférence supérieure à celles des extrémités terminales des plaques-électrodes positive et négative d'une longueur qui peut encercler le noyau de batterie par 1 à 10 cercles.

12. Batterie selon la revendication 10, dans laquelle le noyau de batterie est formé d'au moins une partie d'une région incurvée dans une direction circonférentielle de sorte que l'extrémité terminale de la plaque-électrode positive et/ou l'extrémité terminale de la plaque-électrode négative se termine/se terminent dans celle-ci,
la région incurvée étant formée avec une forme d'arc ou une forme semi-circulaire, et les extrémités terminales de la plaque-électrode positive et de la plaque-électrode négative sont positionnées dans la même région incurvée.

Fig 1

Fig 2

Fig 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20010019795 A1
- JP 2000021453 A
- US 20020197535 A1
- JP 10092418 A